Europäisches Patentamt

European Patent Office

Office européen des brevets

(11) Numéro de publication: **0 323 351 B1**

# FASCICULE DE BREVET EUROPEEN

(45) Date de publication de fascicule du brevet: **14.10.92**

(51) Int. Cl.5: **H01B 1/12**, H01M 4/60

(21) Numéro de dépôt: **88403338.2**

(22) Date de dépôt: **27.12.88**

(54) **Polymères conducteurs électroniques dopés par des hétéropolyanions, leur procédé de préparation et leur utilisation en catalyse chimique et électrochimique.**

(30) Priorité: **30.12.87 FR 8718385**

(43) Date de publication de la demande:
**05.07.89 Bulletin 89/27**

(45) Mention de la délivrance du brevet:
**14.10.92 Bulletin 92/42**

(84) Etats contractants désignés:
**CH DE GB LI**

(56) Documents cités:
**FR-A- 2 573 779**

(73) Titulaire: **COMMISSARIAT A L'ENERGIE ATO-MIOUE Etablissement de Caractère Scientifique Technique et Industriel**
**31/33, rue de la Fédération**
**F-75015 Paris(FR)**

(72) Inventeur: **Bidan, Gérard**
**3, rue des Trois Epis**
**F-38100 Grenoble(FR)**
Inventeur: **Genies, Eugène**
**Rue Troussai**
**F-38120 Saint Egreve(FR)**
Inventeur: **Laprowski, Miettczyslaw**
**4 rue Zaolzianska**
**Zabze(PL)**

(74) Mandataire: **Mongrédien, André et al**
**c/o BREVATOME 25, rue de Ponthieu**
**F-75008 Paris(FR)**

EP 0 323 351 B1

## Description

La présente invention concerne des polymères conducteurs électroniques dopés par des hétéropolyanions, leur procédé de préparation et leur utilisation en catalyse chimique et électrochimique.

De façon plus précise, elle concerne l'immobilisation d'hétéropolyanions au sein de polymères conducteurs électroniques tels que le polypyrrole, le polythiophène, la polyaniline, les poly p-phénylène et plus généralement tous les polymères conjugués.

Les hétéropolyanions sont utilisés sous forme de leurs dérivés acides, c'est-à-dire d'hétéropolyacides dans lesquels les anions de chaque acide conservent leur identité structurelle au sein du radical complexe ou de la molécule formée.

Parmi ces hétéropolyacides, on connaît les acides de formule $H_n(XM_{12}O_{40})$ dans laquelle X est un hétéroatome et M est le molybdène ou le tungstène. Ces hétéropolyacides et les hétér opolyanions sont connus pour catalyser un nombre considérable de réactions qui sont réalisées pour la plupart en phase homogène. Aussi, la mise en oeuvre de ces hétéropolyacides pour la catalyse conduit à de grandes difficultés, notamment pour la récupération du catalyseur. Il est donc d'un grand intérêt de pouvoir immobiliser ces catalyseurs dans une phase solide pour faciliter la mise en oeuvre de la réaction.

Une technique connue pour réaliser cette immobilisation consiste à immobiliser l'hétéropolyacide dans de la polyvinyl-4-pyridine, comme il est décrit par K. Nomiya et al dans Polyhedron, vol.5, n° 4, p.1031-1033 (1986).

Une autre technique d'immobilisation décrite dans le brevet français FR-A-2 573 779 consiste à déposer ces hétéropolyacides et les anions correspondants sur une surface conductrice, par exemple sur une électrode en carbone vitreux ou en graphite, en vue d'activer l'électrode et de l'utiliser dans une cellule d'électrolyse pour la production d'hydrogène.

Cette dernière technique ne permet pas d'inclure l'hétéropolyacide dans la masse de l'électrode et elle limite ainsi l'effet obtenu grâce à l'adjonction de l'hétéropolyanion.

En revanche la première technique permet cette immobilisation dans la masse d'un support, mais le support polyvinyl pyridine n'est pas conducteur de l'électricité, ce qui constitue un inconvénient pour la catalyse des réactions d'oxydoréduction où il est important de pouvoir faire transiter les électrons et les protons dans le support jusqu'au site de la réaction.

La présente invention a précisément pour objet l'immobilisation d'hétéropolyacides ou leurs anions dans la masse d'une phase solide conductrice, qui permet d'obtenir un effet catalytique plus important que dans le cas des matériaux décrits ci-dessus.

Le matériau de la présente invention est un polymère conducteur électronique comportant une matrice polymère dopée par des anions, ces anions comprenant des anions d'au moins un hétéropolyacide de formule :

$$H_n(XM_yV_{y'}O_z)$$

dans laquelle n est un nombre allant de 2 à 6, X est un élément choisi dans le groupe constitué de H, Cu, Be, Zn, B, Al, Ga, Si, Ge, Sn, Ti, Zr, Th, Hf, Ce, N, P, As, V, Sb, Bi, Cr, S, Te, Mn, I, Fe, Co, Ni, Rh, Pt et les terres rares, M est Mo ou W, y est un nombre allant de 6 à 18, $y'$ est un nombre allant de 0 à 12, avec $y + y'$ allant de 6 à 18, et z est un nombre allant de 24 à 70.

Les hétéropolyacides dans lesquels M est le molybdène ou le tungstène et $y'$ est égal à 0, sont des composés connus qui ont été décrits en particulier par G.A. Tsigdinos dans "Heteropolycompounds of Molybdenum and Tungsten", Topics in Current Chemistry, 76, Springer-Verlag, Berlin, Heidelberg, New York, 1978.

Dans ces hétéropolyacides, le molybdène ou le tungstène peuvent être remplacés partiellement par du vanadium et dans ce cas, $y'$ est un nombre allant de 0 à 12.

Les hétéropolyacides les plus courants sont ceux dans lesquels $y' = 0$ et $y = 12$.

A titre d'exemples de tels hétéropolyacides, on peut citer l'acide silicotungstique $H_4(SiW_{12}O_{40})$, l'acide phosphotungstique $H_3(PW_{12}O_{40})$, l'acide phosphomolybdique $H_3(PMo_{12}O_{40})$, l'acide silicomolybdique $H_4(SiMo_{12}O_{40})$, l'acide borotungstique, l'acide germanotungstique, l'acide phosphomolybdique et l'acide germanomolybdique.

On peut aussi utiliser d'autres hétéropolyacides par exemple ceux dans lesquels $y = 18$ et $y' = 0$ comme l'acide phosphotungstique $H_6(P_2W_{18}O_{62})$ et l'acide phosphomolybdique $H_6(P_2Mo_{18}O_{62})$.

Dans les hétéropolyacides utilisés dans l'invention, X peut représenter un des éléments des groupes I à VII de la classification périodique des éléments dans les états d'oxydation suivants:

| Groupe périodique | Eléments |
|---|---|
| I | Cu2 + , H |
| II | Be + 2, Zn + 2 |
| III | B + 3, Al + 3, Ga + 3 |
| IV | Si + 4, Ge + 4, Sn + 4°, Ti + 4, Zr + 4, Th + 4, Hf + 4, Ce + 3, Ce + 4 et les autres terres rares. |
| V | N + 5°, P + 3, P + 5, As + 3, As + 5, V + 4°, V + 5, Sb + 3°, Sb + 5°, Bi + 3 |
| VI | Cr + 3, S + 4, Te + 4, Te + 6 |
| VII | Mn + 2, Mn + 4, I + 7 |
| VII | Fe + 3, Co + 2, Co + 3, Ni + 2, Ni + 4, Rh + 3, Pt + 4°. |

(° L'existence de ces états d'oxydation n'est pas certaine).

Généralement dans l'invention, on utilise des hétéropolyacides dans lesquels X représente P ou Si.

Les polymères conducteurs électroniques utilisables dans l'invention, sont des polymères conjugués. De tels polymères peuvent être obtenus par exemple à partir de pyrrole, de thiophène, d'aniline, de paraphénylènediamine, d'acétylène, de benzène et de leurs dérivés substitués. On peut aussi utiliser dans l'invention les polymères conducteurs électroniques azotés décrits dans le brevet français FR-A-2 588 007 déposé le 30 septembre 1985 et les polymères conducteurs électroniques azotés contenant du soufre décrits dans le brevet français FR-A-2 591 605 déposé le 13 décembre 1985.

l'utilisation dans l'invention d'une phase solide constituée par un polymère conducteur électronique permet d'obtenir une fixation de l'anion de l'hétéropolyacide dans la masse du polymère et d'obtenir ainsi un meilleur effet catalytique que dans le cas du dépôt sur une surface conductrice ou de l'immobilisation dans un polymère non conducteur tel que la polyvinyl-4 pyridine.

De ce fait, les polymères conducteurs électroniques de l'invention qui sont dopés par des anions d'hétéropolyacides peuvent trouver de nombreuses applications. Ils peuvent ainsi être utilisés comme électrode activée pour la réduction électrochimique et surtout comme catalyseur chimique ou électrochimique, en particulier dans les domaines suivants :

Electrolyse de l'eau en milieu acide.

Oxydation des alcools en milieu acide.

Oxydation du cyclohexanol en cyclohexanone et en acide adipique.

Oxydation de diols en diacides.

Oxydation de la méthacroleine en acide méthacrylique.

Synthèse du formiate de méthyle par oxydation électrocatalytique du méthanol.

Anode et cathode pour les piles à combustible en milieu acide.

Oxydation du monoxyde de carbone, réduction des oxydes d'azote.

Catalyseurs pour la purification des gaz d'échappements des moteurs à explosions.

Hydrodésulfuration des hydrocarbures.

oxydation du benzène en phénol.

Préparation des composés carbonylés saturés.

Déshydratation des alcools en oléfines.

Hydratation du propène.

Conversion du méthanol en hydrocarbure.

Activation et fonctionalisation photochimique des alcanes.

Catalyseur de Friedel-Crafts.

Catalyseur pour la polymérisation d'alcools benzyliques.

Photosensibilisateur photoélectrochimique pour la photooxydation de substrats organiques, dont les alcools, éthers, amides etc... et plus généralement la déshydrogénation photoélectrochimique.

Oxydation déshydrogénante de l'acide isobutyrique.

Epoxydation des oléfines.

Conducteurs protoniques pour des membranes d'électrolyseurs ou des piles à combustible.

Les polymères conducteurs électroniques de l'invention dopés par des anions d'hétéropolyacides peuvent être préparés par un procédé consistant :

1°) à préparer tout d'abord une solution contenant, d'une part, un monomère capable de former la matrice polymère par oxydation et, d'autre part, un hétéropolyacide de formule :

$$H_n(XM_yV_{y'}O_z)$$

dans laquelle n est un nombre allant de 2 à 6, X est un élément choisi dans le groupe constitué de H, Cu, Be, Zn, B, Al, Ga, Si, Ge, Sn, Ti, Zr, Th, Hf, Ce, N, P, As, V, Sb, Bi, Cr, S, Te, Mn, I, Fe, Co, Ni, Rh, Pt et les terres rares, M est Mo ou W, y est un nombre allant de 6 à 18, $y'$ est un nombre allant de 0 à 12, avec $y + y'$ allant de 6 à 18, et z est un nombre allant de 24 à 70, et

2°) à former un polymère dopé par les anions de l'hétéropolyacide à partir de cette solution par oxydation chimique ou électrochimique.

Lorsqu'on veut réaliser l'oxydation du monomère par voie électrochimique, on peut utiliser une solution aqueuse ou organique et se servir de l'hétéropolyacide en tant qu'électrolyte. L'oxydation du monomère est réalisée par application d'une différence de potentiel entre deux électrodes immergées dans la solution. Ceci permet de former directement sur l'une des électrodes un dépôt de polymère conducteur électronique dopé par les anions de l'hétéropolyacide. On peut réaliser cette oxydation électrochimique dans les conditions utilisées habituellement pour la préparation des polymères conducteurs électroniques par oxydation électrochimique des monomères correspondants, par exemple utiliser les conditions décrites dans les brevets FR-A-2 545 494 et FR-A-2 588 007.

Les électrodes utilisées pour le dépôt du polymère conducteur électronique dopé par les anions de l'hétéropolyacide peuvent être réalisés en platine, en nickel, en Monel (alliage nickel-cuivre), en carbone ou en un matériau revêtu de carbone, par exemple en acier inoxydable revêtu d'une peinture au graphite.

Les densités de courant utilisées pour réaliser cette oxydation électrochimique dépendent en particulier du monomère à oxyder. Elles peuvent varier de 0,01 à 200 mA/cm$^2$.

Cette oxydation par voie électrochimique permet d'obtenir des polymères conducteurs électroniques dopés dans lesquels la quantité d'anions est relativement importante et se situe par exemple dans la gamme allant de 0,01 à 0,3 anion par motif monomère du polymère.

En fin d'opération, on obtient donc une électrode sur laquelle est déposé le polymère conducteur électronique dopé par les anions de l'hétéropolyacide, et cette électrode peut être utilisée telle quelle pour la catalyse chimique ou électrochimique.

Toutefois, dans certains cas, il est préférable de la soumettre à un traitement complémentaire d'activation par réduction chimique ou électrochimique, notamment lorsqu'elle est destinée à la production d'hydrogène par électrolyse de l'eau. Ce traitement d'activation peut consister en l'application d'un potentiel cathodique de -0,2 à -5 volts pendant 0,1 à 500 min.

On peut aussi préparer les polymères conducteurs électroniques de l'invention dopés par les anions de l'hétéropolyacide en réalisant l'oxydation du monomère par voie chimique.

Dans ce cas, on peut utiliser un agent oxydant classique, par exemple du bichromate de potassium, du permanganate de potassium, de l'eau oxygénée ou d'autres peroxydes, du tétroxyde d'osmium, du persulfate d'ammonium. Cependant, l'utilisation de ces agents oxydants risque d'entraîner un taux de dopage du polymère conducteur électronique par les anions de l'éhétéropolyacide insuffisant.

Aussi, dans ce mode d'oxydation par voie chimique, on préfère utiliser comme agent oxydant, soit l'hétéropolyacide s'il peut jouer le rôle d'oxydant comme dans le cas de $H_3(PMo_{12}W_{40})$, soit un cation oxydant capable de former un sel avec l'hétéropolyacide. Dans ce dernier cas, on prépare tout d'abord un sel de l'hétéropolyacide avec le cation oxydant, qui peut être en particulier constitué par des ions ferriques ou cériques.

Dans ce mode d'oxydation par voie chimique, on peut utiliser une solution aqueuse ou organique comme précédemment. A titre d'exemple de solvants organiques utilisables, on peut citer l'acétonitrile, les alcools dont l'alcool éthylique, le carbonate d'éthylène ou de propylène, le nitrobenzène,.... En fin d'opération, on récupère le polymère conducteur dopé sous la forme d'un précipité que l'on peut séparer de la solution par filtration. On peut utiliser ce polymère directement ou lui faire subir un traitement d'activation par réduction chimique, par exemple à l'aide de métaux alcalins ou par voie électrochimique par réduction à -2 Volts (ECS) pendant deux heures dans l'acétonitrile ($HClO_4$, 0,5 M). Pour les réductions chimiques, le polymère dopé par les hétéropolyanions est agité pendant une heure avec du sodium en fil au sein de tétrahydrofuranne.

On peut aussi soumettre le polymère conducteur dopé à différents traitements qui sont fonction de l'application mise en oeuvre. Ces traitements peuvent être un lavage au Soxhlet à l'eau et à l'acétonitrile, ou un séchage sous vide à des températures pouvant aller par exemple jusqu'à 300°C. On peut aussi compacter le polymère avec divers additifs tels que du carbone, du polytétrafluoréthylène, ou le fritter avec divers additifs. On peut encore réaliser des composites divers avec des polymères classiques ou des polymères conducteurs ioniques tels que le Nafion.

D'autres caractéristiques et avantages de l'invention apparaîtront mieux à la lecture des exemples suivants donnés bien entendu à titre illustratif et non limitatif en référence au dessin annexé sur lequel :

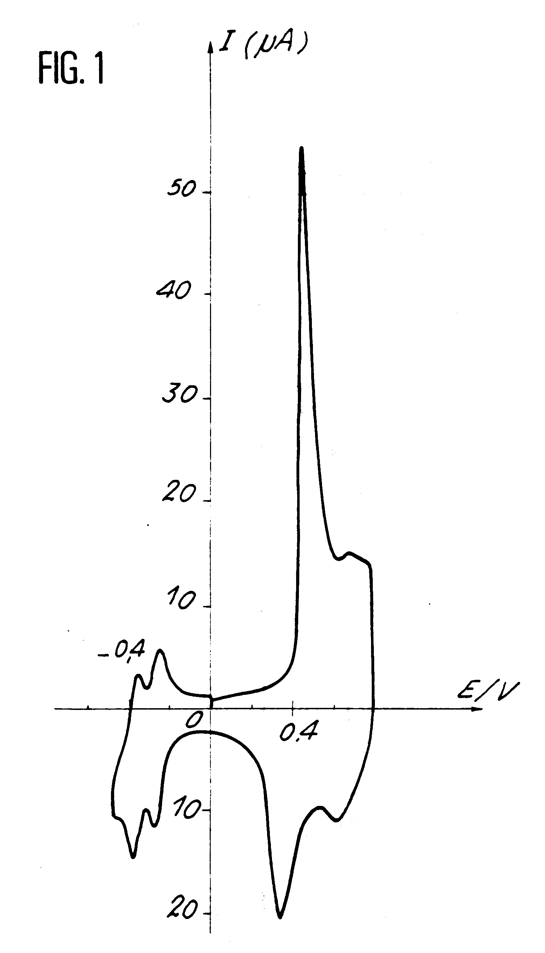

- les figures 1 à 3 sont des courbes de voltamétrie cyclique obtenues avec des polymères conducteurs électroniques dopés par des anions d'hétéropolyacides, conformes à l'invention.

EXEMPLE 1. Préparation électrochimique de polyaniline dopée par les anions de l'acide tungstosilicique : $H_4(SiW_{12}O_{40})$.

On prépare tout d'abord une solution à 0,1 mol/l d'acide tungstosilicique $H_4(SiW_{12}O_{40})$ et à 0,02 mol/l d'aniline dans l'acétonitrile. On introduit cette solution dans une cellule de 10 cm$^3$ comportant un montage à trois électrodes dont une électrode de travail en carbone vitreux de 2mm de diamètre, une électrode auxiliaire en platine et une électrode de référence Ag/Ag+, et un potentiostat. On porte l'électrode de travail au potentiel de 0,85V jusqu'à ce qu'il passe dans le circuit 20mC.

Dans ces conditions, on forme sur l'électrode de travail, un dépôt de polyaniline dopée par l'anion de l'acide tungstosilicique.

On lave ensuite l'électrode à l'acétonitrile, puis on étudie son comportement en voltamétrie cyclique dans une solution d'acétonitrile à 0,5 mol/l d'acide perchlorique, avec une vitesse de balayage de 20 mV/s.

Les résultats obtenus sont donnés sur la figure 1 qui représente la courbe de voltamétrie cyclique concernant cette électrode.

Sur cette figure, on voit que, dans le domaine des potentiels positifs, il se produit un échange redox important qui est caractéristique de la polyaniline, et on observe, dans le domaine des potentiels négatifs, deux transferts réversibles qui sont caractéristiques de l'acide tungstosilicique. En revanche, bien que le milieu soit très acide on n'observe pas de réduction des protons dans le domaine négatif en raison de la forte surtension des protons sur le carbone vitreux de l'électrode et de la difficulté que peuvent avoir ces derniers pour diffuser dans le polymère, alors que l'on obtiendrait un fort dégagement d'hydrogène à partir des potentiels faiblement négatifs avec une électrode de platine qui ne présente qu'une faible surtension à la décharge de l'hydrogène.

Aussi, pour obtenir un courant de réduction des protons avec l'électrode de l'invention, il est nécessaire de l'activer. Ceci est effectué par application d'un potentiel cathodique de -2V, pendant 2h, à l'électrode immergée dans la solution d'acétonitrile à 0,5 mol/l d'acide perchlorique. Après ce traitement, on étudie le comportement de l'électrode par voltamétrie cyclique dans les mêmes conditions que précédemment.

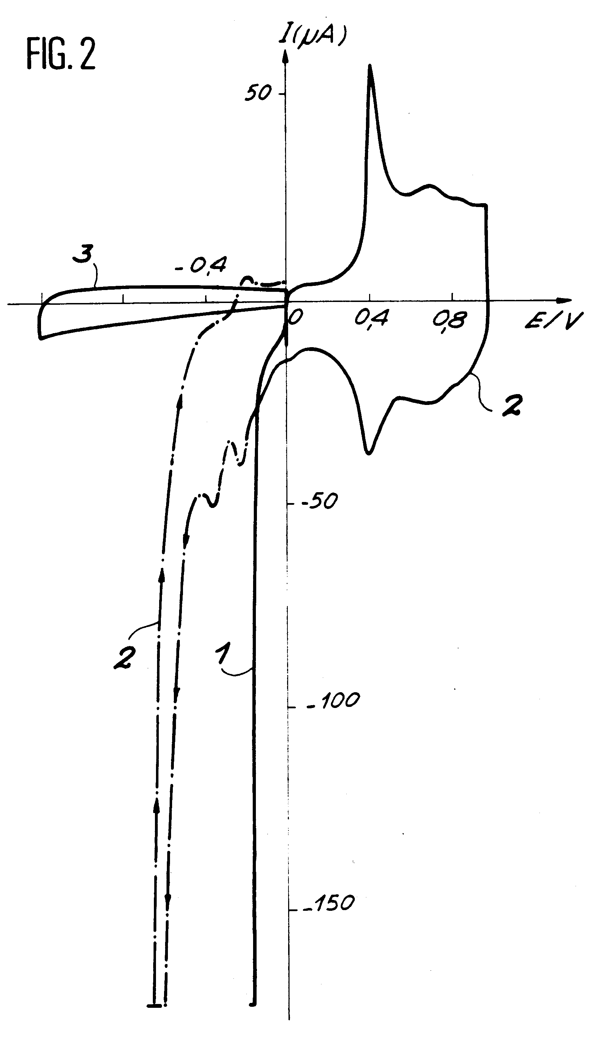

La figure 2 représente les courbes de voltamétrie cyclique, obtenues avec cette électrode (courbe 1) ainsi qu'avec l'électrode de carbone vitreux revêtue de polyaniline dopée par les anions de l'acide tungstosilicique mais non activée (courbe 2) et avec une électrode en carbone vitreux nue (courbe 3).

Ainsi, sur cette figure, la courbe 1 représente la réduction des protons sur l'électrode après son activation à -2V pendant deux heures. La courbe 2 représente la courbe de réduction des protons sur l'électrode modifiée par le dépôt de polyaniline dopé par l'anion de l'acide tungstosilicique. La courbe 3 représente la courbe intensité-potentiel de réduction des protons ($HClO_4$) dans l'acétonitrile sur une électrode en carbone vitreux. Avec la courbe 3, on remarque une forte surtension à la réduction des protons alors que dans le cas de la courbe 2, on observe un effet catalytique sur la réduction des protons.

Dans le cas de la courbe 1, on remarque que l'on obtient une réduction des protons avec l'électrode activée pratiquement aussi facilement que sur une électrode de platine.

Ainsi, l'électrode activée conforme à l'invention a un comportement électrochimique voisin de celui du platine avec en plus une caractéristique volumique des modes de transport, ce qui la rend très avantageuse puisqu'elle est réalisée sur un matériau bon marché tel que le carbone. On peut donc utiliser cette électrode pour l'électrolyse de l'eau, comme anode ou comme cathode dans des milieux neutres et acides car le polymère conducteur risque de se dégrader en milieu basique.

Cette électrode peut également être utilisée dans des piles à combustible en tant qu'électrode positive ou électrode négative. Pour l'électrode à oxygène, il sera avantageux d'utiliser une électrode à base de polyaniline qui présente déjà un comportement satisfaisant pour catalyser la réduction de l'oxygène. Le combustible peut être avantageusement constitué par des alcools, par exemple du méthanol en milieu acide.

Cette électrode peut aussi être utilisée sur un matériau poreux tel que du carbone ou sur un matériau pulvérulent comme le noir d'acétylène, pour un montage en lit fluidifié ou immobile.

La polyaniline dopée par les anions de l'acide tungstosilicique obtenue dans cet exemple trouve donc de nombreuses utilisations.

EXEMPLE 2. Préparation électrochimique de poly(N-méthylpyrrole) dopé par les anions de l'acide molyb-dophosphorique (V): $H_3(P^{+5}Mo_{12}O_{40})$.

On procède comme dans l'exemple 1 mais en utilisant 10cm$^3$ d'acétonitrile contenant 0,1 mol/l d'acide molybdophosphorique (V) : H$_3$(P$^{+5}$Mo$_{12}$O$_{40}$) et 0,05 mol/l de N-méthylpyrrole et on laisse passer 10 mC dans le circuit.

Après cette opération, on lave l'électrode dans l'acétonitrile et on étudie son comportement électrochimique au cours d'un balayage de voltamétrie cyclique dans une solution d'acétonitrile contenant 0,1 mol/l de LiClO$_4$.

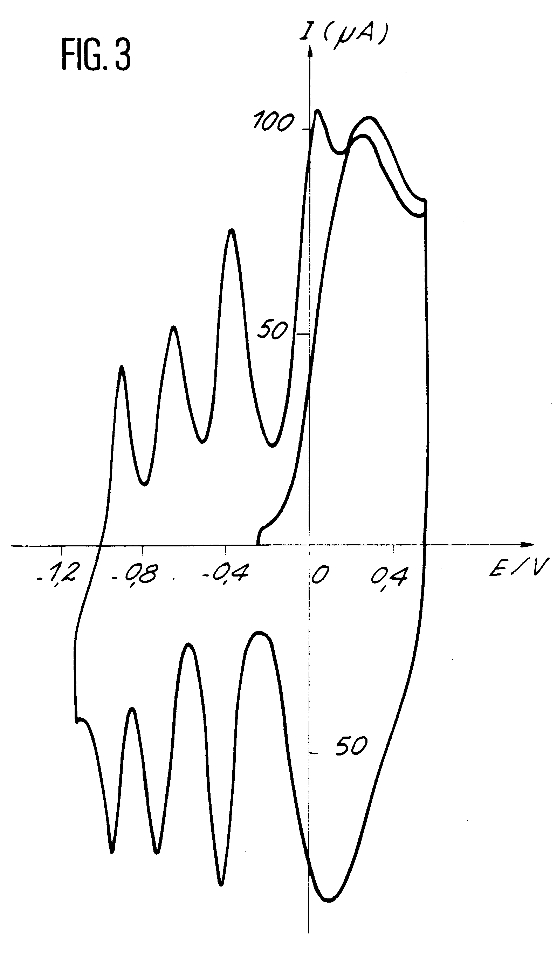

La figure 3 représente la courbe de voltamétrie cyclique obtenue à 50 mV/s.

On reconnaît sur cette courbe, dans le domaine positif, le pic anodique et le pic cathodique caractéristiques du comportement redox du poly(N-méthylpyrrole). Dans le domaine négatif, on remarque 3 pics réversibles qui sont caractéristiques de l'acide molybdophosphorique.

Cette électrode peut être utilisée telle quelle ou être activée en la portant pendant 120 min à un potentiel négatif de -1 à -2 Volts dans une solution acide.

Elle peut être utilisée pour catalyser tous les types de réaction décrits précédemment.

EXEMPLE 3. Préparation chimique de polypyrrole dopé par les anions de l'acide tungstosilicique H$_4$-(SiW$_{312}$O$_{40}$).

On prépare une solution de 10 cm d'acétonitrile contenant 200 mg de pyrrole à laquelle on ajoute, à la température ambiante, 5,8g de tungstosilicate de fer : Fe$_4$(SiW$_{12}$O$_{40}$) pour oxyder tout le pyrrole par échange de 2,5 électrons par motif pyrrole. On filtre le produit obtenu, on le lave à l'acétonitrile et on le sèche sous vide. On obtient ainsi du polypyrrole dopé par 33% d'anions tungstosilicique avec un rendement de la réaction de polymérisation de 81%.

L'anion dopant provenant de l'acide tungstosilicique reste remarquablement immobilisé au sein du polypyrrole en raison de sa taille importante. En effet, si l'on cherche à l'échanger par des anions perchlorate en trempant le produit dans une solution d'acide perchlorique dans l'acétonitrile pendant plusieurs jours, la perte de poids observée ne correspond qu'à l'échange de 10% de l'anion de l'hétéropolyacide.

Les spectres infrarouges par transformée de Fourier et l'analyse centésimale confirment une structure de polypyrole dopé par l'anion de l'acide H$_4$(SiW$_{12}$O$_{40}$).

Ce matériau peut être utilisé comme catalyseur chimique ou électrochimique, en phase vapeur ou en présence d'une solution aqueuse ou organique, sans avoir été activé ou après activation par réduction chimique ou électrochimique.

EXEMPLE 4. Préparation chimique de polypyrrole dopé par les anions de l'acide molybdophosphorique (V) : H$_3$(P5+Mo$_{12}$O$_{40}$).

On part d'une solution constituée par 10 cm$^3$ d'acétonitrile contenant 200 mg de pyrrole à laquelle on ajoute 10g d'acide molybdophosphorique (V) : H$_3$ (P5+Mo$_{12}$O$_{40}$), qui est suffisamment oxydant pour oxyder le pyrrole en polypyrrole.

On soumet le mélange à une agitation pendant une heure sous azote, puis on le filtre et on lave abondamment le produit filtré à l'acétonitrile. On récupère ainsi 80mg de polypyrrole dopé par les anions de l'acide molybdophosphorique (V) : H$_3$(P5+Mo$_{12}$O$_{40}$).

On peut utiliser ce matériau comme catalyseur chimique ou électrochimique, en phase vapeur ou en présence d'une solution aqueuse ou organique, sans activation supplémentaire ou après activation par réduction chimique ou électrochimique.

EXEMPLE 5. Utilisation d'une électrode en carbone vitreux recouverte de polyaniline dopée par les anions de l'acide tungstosilicique pour l'électrolyse de l'eau.

On prépare comme dans l'exemple 1, une électrode en carbone vitreux de 10 cm$^2$ recouverte de polyaniline dopée par les anions de l'acide tungstosilicique H$_4$(SiW$_{12}$O$_{40}$) et on la soumet au traitement d'activation utilisé dans l'exemple 1 pour obtenir la courbe 1 de la figure 2. On utilise ensuite cette électrode pour réaliser l'électrolyse de l'eau en milieu acide avec une densité de courant de 1 à 100 mA/cm$^2$ pendant plusieurs heures, la tension d'électrode entre la cathode et l'anode étant d'environ 2V.

**Revendications**

1.  Polymère conducteur électronique comportant une matrice polymère dopée par des anions, caractérisé

6

en ce que ces anions comprennent des anions d'au moins un hétéropolyacide de formule :

$$H_n(XM_yV_{y'}O_z)$$

dans laquelle n est un nombre allant de 2 à 6, X est un élément choisi dans le groupe constitué de H, Cu, Be, Zn, B, Al, Ga, Si, Ge, Sn, Ti, Zr, Th, Hf, Ce, N, P, As, V, Sb, Bi, Cr, S, Te, Mn, I, Fe, Co, Ni, Rh, Pt et les terres rares, M est Mo ou W, y est un nombre allant de 6 à 18, $y'$ est un nombre allant de 0 à 12, avec $y + y'$ allant de 6 à 18, et z est un nombre allant de 24 à 70.

2. Polymère selon la revendication 1, caractérisé en ce que X est P ou Si.

3. Polymère selon la revendication 2, caractérisé en ce que l'hétéropolyacide répond à la formule :

$$H_4(SiW_{12}O_{40})$$

4. Polymère selon la revendication 2, caractérisé en ce que l'hétéropolyacide répond à la formule :

$$H_3(PMo_{12}O_{40})$$

5. Polymère selon l'une quelconque des revendications 1 à 4, caractérisé en ce que la matrice polymère est un polymère obtenu à partir de monomères choisis dans le groupe constitué du pyrrole, du thiophène, de l'aniline, de la paraphénylène-diamine, de l'acétylène, du benzène, et de leurs dérivés substitués.

6. Polymère selon la revendication 5, caractérisé en ce que la matrice polymère est en poly(N-méthylpyrrole).

7. Polymère selon la revendication 5, caractérisé en ce que la matrice polymère est en polyaniline.

8. Polymère selon la revendication 5, caractérisé en ce que la matrice polymère est en polypyrrole.

9. Polymère selon l'une quelconque des revendications 1 à 8, caractérisé en ce que la quantité d'anions présente dans le polymère conducteur est de 0,01 à 0,3 anion par motif monomère de la matrice polymère.

10. Procédé de préparation d'un polymère conducteur électronique selon l'une quelconque des revendications 1 à 9, caractérisé en ce qu'il consiste :
   a) à préparer une solution contenant, d'une part, un monomère capable de former la matrice polymère par oxydation et, d'autre part, un hétéropolyacide de formule :

$$H_n(XM_yV_{y'}O_z)$$

   dans laquelle n est un nombre allant de 2 à 6, X est un élément choisi dans le groupe constitué de H, Cu, Be, Zn, B, Al, Ga, Si, Ge, Sn, Ti, Zr, Th, Hf, Ce, N, P, As, V, Sb, Bi, Cr, S, Te, Mn, I, Fe, Co, Ni, Rh, Pt et les terres rares, M est Mo ou W, y est un nombre allant de 6 à 18, $y'$ est un nombre allant de 0 à 12, avec $y + y'$ allant de 6 à 18, et z est un nombre allant de 24 à 70, et
   b) à former un polymère dopé par les anions de l'hétéropolyacide à partir de cette solution par oxydation chimique ou électrochimique.

11. Procédé selon la revendication 10, caractérisé en ce que l'on réalise l'oxydation par voie électrochimique en utilisant l'hétéropolyacide comme électrolyte.

12. Procédé selon la revendication 10, caractérisé en ce que l'on réalise l'oxydation par voie chimique en utilisant comme agent oxydant l'hétéropolyacide ou un sel de l'hétéropolyacide comportant un cation oxydant.

13. Procédé selon la revendication 12, caractérisé en ce que le cation oxydant est $Fe^{3+}$ ou $Ce^{4+}$.

EP 0 323 351 B1

**14.** Procédé selon l'une quelconque des revendications 10 à 13, caractérisé en ce que l'on soumet ensuite le polymère conducteur dopé par les anions de l'hétéropolyacide à un traitement d'activation par réduction chimique ou électrochimique.

**15.** Catalyseur chimique ou électrochimique, caractérisé en ce qu'il est constitué par un polymère conducteur électronique dopé par les anions d'un hétéropolyacide selon l'une quelconque des revendications 1 à 9.

**Claims**

**1.** Electronic conductive polymer comprising a polymer matrix doped by anions, characterized in that said anions comprise anions of at least one heteropolyacid of formula:

$$H_n(XM_yV_{y'}O_z)$$

is which n is a number between 2 and 6, X is element chosen from the group constituting H, Cu, Be, Zn, B, Al, Ga, Si, Ge, Sn, Ti, Zr, Th, Hf, Ce, N, P, As, V, Sb, Bi, Cr, S, Te, Mn, I, Fe, Co, Ni, Rh, Pt and the rare earths, M is Mo or W, y is a number between 6 and 18, y' is a number from 0 to 12 with $y + y'$ ranging between 6 and 18 and z is a number between 24 and 70.

**2.** Polymer according to claim 1, characterized is that X is P or Si.

**3.** Polymer according to claim 2, characterized in that the heteropolyacid is is accordance with formula:

$$H_4(SiW_{12}O_{40})$$

**4.** Polymer according to claim 2, characterized in that the heteropolyacid is is accordance with the formula:

$$H_3(PMo_{12}O_{40})$$

**5.** Polymer according to any one of the claims 1 to 4, characterized is that the polymer matrix is a polymer obtained from monomers chosen from the group constituted by pyrrole, thiophene, aniline, paraphenylene-diamine, acetylene, benzene and their substituted derivatives.

**6.** Polymer according to claim 5, characterized in that the polymer matrix is of poly-(N-methylpyrrole).

**7.** Polymer according to claim 5, characterized in that the polymer matrix is of polyaniline.

**8.** Polymer according to claim 5, characterized in that the polymer matrix is of polypyrrole.

**9.** Polymer according to any one of the claims 1 to 8, characterized in that the quantity of anions present in the conductive polymer is 0.01 to 0.3 anion per monomer unit of the polymer matrix.

**10.** Process for the preparation of an electronic conductive polymer according to any one of the claims 1 to 9, characterized in that it comprises:
   a) firstly preparing a solution containing on the one hand a monomer able to form the polymer matrix by oxidation and on the other a heteropolyacid of formula:

$$H_n(XM_yV_{y'}O_z)$$

   in which n is a number between 2 and 6, X is an element chosen from within the group constituted by H, Cu, Be, Zn, B, Al, Ga, Si, Ge, Sn, Ti, Zr, Th, Hf, Ce, N, P, As, V, Sb, Bi, Cr, S, Te, Mn, I, Fe, Co, Ni, Rh, Pt and rare earths, M is Mo or W, y is a number between 6 and 18, y' is a number' from 0 to 12 with $y + y'$ ranging between 6 and 18 and z is a number between 24 and 70 and
   b) forming a polymer doped by the anions of the heteropolyacid from said solution by chemical or electrochemical oxidation.

8

**11.** Process according to claim 10, characterized in that oxidation is carried out electrochemically using the heteropolyacid as the electrolyte.

**12.** Process according to claim 10, characterized in that oxidation is carried out chemically using as the oxidizing agent the heteropolyacid or a heteropolyacid salt having an oxidizing cation.

**13.** Process according to claim 12,, characterized in that the oxidizing cation is $Fe^{3+}$ or $Ce^{4+}$.

**14.** Process according to any one of the claims 10 to 13, characterized in that the conductive polymer doped by the anions of the heteropolyacid then undergoes an activation treatment by chemical or electrochemical reduction.

**15.** Chemical or electrochemical catalyst, characterized in that it is constituted by an electronic conductive polymer doped by the anions of a heteropolyacid according to any one of the claims 1 to 9.

**Patentansprüche**

**1.** Elektrisch leitfähiges Polymer mit einer mit Anionen dotierten Polymermatrix, dadurch gekennzeichnet, daß die Anionen Anionen von wenigstens einer Heteropolysäure der Formel:

$$H_n(XM_yV_{y'}O_z)$$

umfassen, in der n eine Zahl zwischen 2 und 6 ist, X ein Element ist, das aus der Gruppe ausgewählt wird, die besteht aus H, Cu, Be, Zn, B, Al, Ga, Si, Ge, Sn, Ti, Zr, Th, Hf, Ce, N, P, As, V, Sb, Bi, Cr, S, Te, Mn, I, Fe, Co, Ni, Rh, Pt und den seltenen Erden, M Mo oder W ist, y eine Zahl zwischen 6 und 18 ist, y' eine Zahl zwischen 0 und 12 ist, wobei y + y' zwischen 6 und 18 liegt, und z eine Zahl zwischen 24 und 70 ist.

**2.** Polymer nach Anspruch 1, dadurch gekennzeichnet, daß X P oder Si ist.

**3.** Polymer nach Anspruch 2, dadurch gekennzeichnet, daß die Heteropolysäure der Formel:

$$H_4(SiW_{12}O_{40})$$

entspricht.

**4.** Polymer nach Anspruch 2, dadurch gekennzeichnet, daß die Heteropolysäure der Formel:

$$H_3(PMo_{12}O_{40})$$

entspricht.

**5.** Polymer nach einem der Ansprüche 1 bis 4, dadurch gekennzeichnet, daß die Polymermatrix ein Polymer ist, das aus Monomeren erhalten wird, die aus der Gruppe ausgewählt sind, die aus Pyrrol, Thiophen, Anilin, Paraphenyldiamin, Azetylen, Benzen und ihren Ersatzderivaten besteht.

**6.** Polymer nach Anspruch 5, dadurch gekennzeichnet, daß die Polymermatrix aus poly(N-Methylpyrrol) besteht.

**7.** Polymer nach Anspruch 5, dadurch gekennzeichnet, daß die Polymermatrix aus Polyanilin besteht.

**8.** Polymer nach Anspruch 5, dadurch gekennzeichnet, daß die Polymermatrix aus Polypyrrol besteht.

**9.** Polymer nach einem der Ansprüche 1 bis 8, dadurch gekennzeichnet, daß die in dem leitenden Polymer vorhandene Anionenmenge 0,01 bis 0,3 Anionen pro Monomereinheit der Polymermatrix beträgt.

**10.** Verfahren zum Herstellen eines elektrisch leitfähigen Polymers nach einem der Ansprüche 1 bis 9, dadurch gekennzeichnet, daß es darin besteht:

a) eine Lösung vorzubereiten, die auf der einen Seite ein Monomer enthält, das in der Lage ist, durch Oxydation eine Polymermatrix zu bilden, und auf der anderen Seite eine Heteropolysäure der Formel:

$$H_n(XM_yV_{y'}O_z)$$

enthält, in der n eine Zahl zwischen 2 und 6 ist, X ein Element ist, das aus der Gruppe ausgewählt wird, die besteht aus H, Cu, Be, Zn, B, Al, Ga, Si, Ge, Sn, Ti, Zr, Th, Hf, Ce, N, P, As, V, Sb, Bi, Cr, S, Te, Mn, I, Fe, Co, Ni, Rh, Pt und den seltenen Erden, M No oder W ist, y eine Zahl zwischen 6 und 18 ist, y' eine Zahl zwischen 0 und 12 ist, wobei y + y' zwischen 6 und 18 liegt, und z eine Zahl zwischen 24 und 70 ist, und

b) ein mit den Anionen der Heteropolysäure dotiertes Polymer ausgehend von dieser Lösung durch chemische oder elektrochemische Oxydation zu bilden.

**11.** Verfahren nach Anspruch 10, dadurch gekennzeichnet, daß man die Oxydation elektrochemisch durch Verwendung der Heteropolysäure als Elektrolyten durchführt.

**12.** Verfahren nach Anspruch 10, dadurch gekennzeichnet, daß man die Oxydation chemisch durch Verwendung der Heteropolysäure oder eines Salzes der Heteropolysäure, das ein oxydierendes Kation aufweist, als Oxidanz durchführt.

**13.** Verfahren nach Anspruch 12, dadurch gekennzeichnet, daß das oxydierende Kation $Fe^{3+}$ oder $Ce^{4+}$ ist.

**14.** Verfahren nach einem der Ansprüche 10 bis 13, dadurch gekennzeichnet, daß man anschließend das leitfähige, von den Anionen der Heteropolysäure dotierte Polymer einer Aktivierungsbehandlung durch chemische oder elektrochemische Reduktion unterwirft.

**15.** Chemischer oder elektrochemischer Katalysator, dadurch gekennzeichnet, daß er aus einem elektrisch leitfähigen, von den Anionen einer Heteropolysäure dotierten Polymer nach einem der Ansprüche 1 bis 9 besteht.

FIG. 1

FIG. 2

FIG. 3